Europäisches Patentamt

European Patent Office

Office européen des brevets

(11) Publication number: **0 205 486**
**B1**

(12) **EUROPEAN PATENT SPECIFICATION**

(45) Date of publication of patent specification: **24.01.90**

(21) Application number: **85906063.4**

(22) Date of filing: **03.12.85**

(86) International application number:
**PCT/EP85/00657**

(87) International publication number:
**WO 86/03568 19.06.86 Gazette 86/13**

(51) Int. Cl.⁵: **F 16 K 11/074**

(54) **A SINGLE HANDLE MIXING VALVE HAVING A HYDRAULIC RESPONSIVE MEMBER PRESSING THE CARTRIDGE.**

(30) Priority: **11.12.84 IT 682318**
**09.01.85 IT 670148**

(43) Date of publication of application:
**30.12.86 Bulletin 86/52**

(45) Publication of the grant of the patent:
**24.01.90 Bulletin 90/04**

(84) Designated Contracting States:
**CH DE FR GB LI**

(56) References cited:
**EP-A-0 060 529**
**EP-A-0 119 960**
**WO-A-84/04146**
**FR-A-2 516 195**

(73) Proprietor: **GEVIPI A.G.**
**Aeulestrasse 5 Postfach 83 Triesen**
**FL-9490 Vaduz (LI)**

(72) Inventor: **KNAPP, Alfons**
**Bleicherstrasse 3**
**D-7950 Biberach/Riss (DE)**

(74) Representative: **Patrito, Pier Franco, Dr. Ing.**
**Cabinet PATRITO BREVETTI Via Don Minzoni 14**
**I-10121 Torino (IT)**

Courier Press, Leamington Spa, England.

## Description

### Technical field

This invention relates to a mixing valve comprising a valve body with inlets for hot and cold water, at least one outlet for mixed water and an inner chamber for housing a cartridge, control means, a replaceable cartridge inserted in said chamber of the valve body, a fixed plate of hard material having water passages mounted in said cartridge and at least a movable plate housed in said cartridge, connected to said control means and intended to cooperate with said fixed plate in order to regulate the water flow delivered to the outlet and the mixing ratio between hot and cold water.

### Background of the invention

Valves that incorporate sliding hard material plates, commonly of ceramic, are well known and have many advantages over other types of valves: the hard material plates are durable and provide for a long life with virtually no leakage between the two highly polished valving surfaces of the plates. However, in order to operate an effective closure, the fixed and movable plates of such valves should be pressed against the one another and against the respective packings by an adhesion force adequate to the inlet water pressure, which otherwise could separate the plates the one from the other or from the respective packings, thus rendering ineffective the closure. Commonly, this adhesion compressive force is obtained by having the fixed plate seated on resilient elastomeric seals. The upper portion of the valve must have all its elements dimensioned precisely so that the movable plate will be under compressive force. Manufacturing tolerances have to be within an extremely restricted range in order for the resilient elastomeric seals to function properly. If the total height of the internal valve members is slightly too great the elastomeric seals become excessively compressed and the plates are pressed against each other with too great a force and are therefore hard to operate, or even are blocked. On the other hand, if the total height of the internal valve members is slightly too little, the resilient elastomeric seals do not adequately press the two plates together so that leakage may occur, not only, but the elastomeric seals may even be displaced out from their seatings, thus requiring dismounting and repairing the valve. The action of thermal expansion of the components may be sufficient to give rise to said inconveniences.

The stated inconveniences do not take place when, instead of a fixed plate, the valve comprises two movable hollow cylinders pressed by the water pressure against a movable plate; examples of such structure are WO—A—84/04146 and FR—A—2.516.195. However such a structure involves severe limitations to the operation which can be obtained by the valve.

Therefore, it was aimed to attain in a replaceable cartridge containing control members in the form of plates a behaviour similar to that shown by movable hollow cylinders directly mounted in a valve body and not forming a replaceable cartridge.

However, a fixed plate embodied in a cartridge could not be simply provided at its outline with a packing, and inserted in the valve body for receiving the action of the hydraulic pressure, as it is done with the known hollow cylinders. A first reason is that the fixed plate should have passages for both cold and hot water, and it should separately receive the cold and hot water flows, so it cannot be inserted in a single seating of the valve body as a hollow cylinder. A second reason is that a fixed plate of hard material may be manufactured only with a very limited thickness, so it would not be correctly guided in a seating for axial displacement. A third reason is that inserting the fixed plate directly in a seating of the valve body would be inconsistent with the need for the fixed plate to be contained in a replaceable cartridge.

For these reasons the advantages shown since several years by the valves using hollow cylinders had not been transferred to the valves using a cartridge with fixed and movable plates. The problem to be solved was that of overcoming the above difficulties and to apply a hydraulic force to a fixed plate with passage openings in order to press this fixed plate against a movable plate, both fixed and movable plates being part of a replaceable cartridge.

### Disclosure of invention

The general object of this invention is to provide a simple and rational means for applying to the cartridge bottom a force, directed towards the fixed plate, adequate to the actual working conditions of the valve, this force being discharged by the fixed plate, on its turn, onto the movable plate and thus also providing the needed adhesion force applied to the pair of plates of the valve.

A more specific object of the invention is to provide a valve of the type referred to, wherein an adhesion force adequate to any circumstance may be applied to the pair of plates of the valve, though not necessarily requiring for the cartridge to have specific shape or features, whereby it is possible to insert in such a valve the conventional cartridges manufactured for usual valves.

These objects are attained, according to the invention, by the fact that a valve having the features stated in the preamble further comprises a hydraulic responsive member, acting as a piston, sealingly inserted with axial mobility in at least a corresponding bore of the valve body between the body bottom and said chamber intended to house the cartridge, said hydraulic responsive member having fluid passages which are sealingly connected with the inlets of said body and open on the face of the hydraulic responsive member facing the chamber for the cartridge in order to supply hot and cold water to the water passages of said fixed plate, said hydraulic responsive member having at least a surface exposed to the water pressure of at least one of said body inlets. Preferably, in addition, a spring means is inserted between the valve body bottom and the hydraulic responsive member in order to apply to the latter a force directed towards the chamber which houses the cartridge.

Thanks to these characteristics, the hydraulic responsive member applies to the cartridge a force proportional to the water pressure, due to said surface of the hydraulic responsive member exposed to the water pressure, as well as, if the case may be, a preloading force caused by said spring means. By a suitable design of the components, the total force applied to the pair of plates and to the respective packings may be rendered sufficient for ensuring, in any working condition, a correct adhesion between said components, though at the same time avoiding application of unnecessarily great forces. In many cases a correct design allows to attain this behaviour even without providing spring means, however these latter can be provided whenever useful. Moreover, the hydraulic responsive member also provides, by its passages, a connection of the body inlets to the cartridge entrances for hot and cold water, and since various shapes may be given to said passages the positions of the body inlets are rendered at a large extent independent from the positions of the cartridge entrances for hot and cold water, thus allowing a more free design of the valve body.

Brief description of the drawings

These and other characteristics and advantages of the invention will be more clearly apparent from the following description of some embodiments, given as non limiting examples, diagrammatically shown in the appended drawings in which:

Figures 1 to 4 are side elevational views of axial sections taken through four embodiments of the invention;

Figure 5 shows a cross section taken perpendicularly to the valve axis, in register with the body inlets of any valve whatever of Figures 1 to 3.

Best modes for carrying out the invention

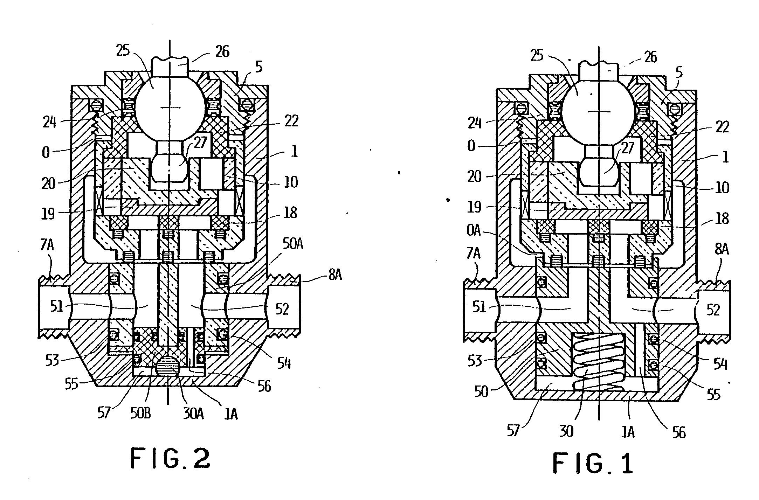

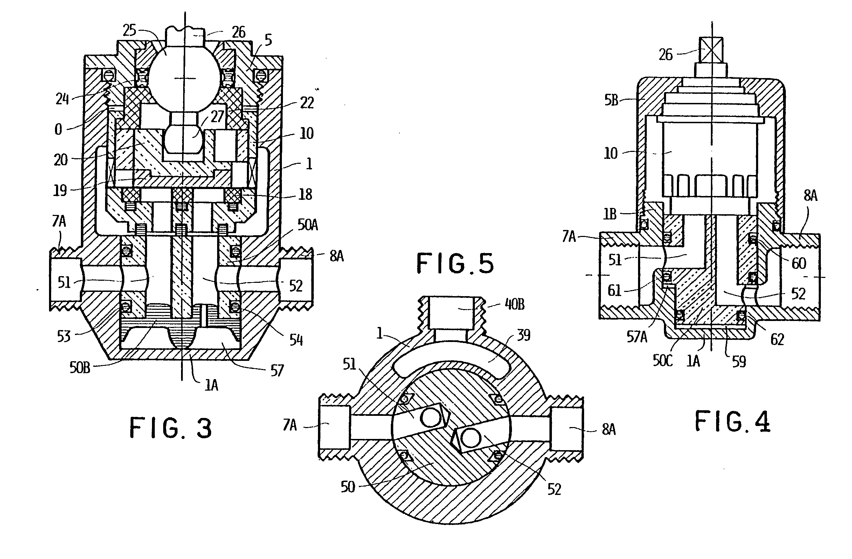

Referring now to Figures 1 to 3 and 5, a valve according to the invention includes a body 1 provided with two inlet connections 7A and 8A for hot and cold water respectively, and with a mixed water outlet 40B. The body 1 has a bore intended for receiving a hydraulic responsive member acting as a piston, described later on, and this bore expands towards the body opening thus forming a hollow chamber 2 which is adapted to receive a cartridge 10 as well as to collect the mixed water. Mixed water is then sent to the outlet 40B through a passage 39 shown in Figure 5. The opening of body 1 is occluded by a cap member 5, which may for example be screwed, has a seal packing and holds a half-bearing 23 wherein there is seated a ball 25 serving as pivot for a control lever 26 having an inner arm 27 which operates the mechanisms of a cartridge 10 inserted into the body 1.

The cartridge 10 may be of a conventional type, usually intended for valves of a type not embodying the invention, and includes an envelope 10, usually of plastics, a fixed hard material plate 18 seated within the envelope 10 and provided with passage openings for hot and cold water, and a movable hard material plate 19 positioned on the fixed plate 18 and movable by a control head 20 which in turn is guided by a ring 21 and is operated by arm 27. The control head 20 rests against a half bearing 22 which completes the seating for ball 25 and compresses a seal 24, the entity of whose compression is defined by the half-bearing 22 resting against cap member 5. Resilient elastomeric seals are disposed on the bottom of the cartridge envelope 10, towards the inside for the fixed plate 18 and towards the outside for sealing with respect to the valve body, and more precisely, in this case, with the hydraulic responsive member to be described later on. It is recognized that the cartridge 10 is conventional in structure and that the operation thereof is also conventional and well known and does not require further explication.

With reference to Figure 1, a hydraulic responsive member 50 in the form of a piston is positioned within the bore of body 1 for axial movement therein. The hydraulic responsive member 50 is interposed between the chamber 2 for cartridge 10 and the bottom 1A of body 1 and has two passages 51 and 52 designed for communicating the inlets 7a and 8a of body 1 with two entrances of the cartridge 10 corresponding to the passage openings of the fixed plate 18. The seal between each passage 51, 52 and the corresponding inlet 7A, 8A is given by packings 53, 54, while a peripheral packing 55 seals the piston 50 with respect of the bore of body 1. A passage 56 through piston 50 connects one of the passages, in this case passage 52, to a chamber 57 formed between the piston 50 and the bottom 1A of the body 1, which chamber, therefore, communicates with one of the inlets 7A, 8A, in this case with inlet 8A. A spring 30 is mounted between the piston 50 and the bottom 1A and is compressed therebetween.

The assembly of the mixing valve (made when there is not yet water inlet pressure) has the spring 30 and the piston 50 dropped into the bore of body 1; the cartridge 10 is then placed within the chamber 2 along with all the controlling, driving and sealing members, and a cap 5 is screwed into position forcing the cartridge 10 against the piston 50 and this latter down into the bore, thus compressing the spring 30. The spring 30 causes the piston to bias the cartridge upwardly so that the fixed plate 18 is compressed against the movable plate 19; the strength of spring 30 is selected in order to correspond to the minimum force which prevents leakages at low water pressure.

When later on a water pressure is sent to the inlets 7A and 8A, this pressure is transmitted through the passage 56 to chamber 57 and it pushes upwards piston 50 to bias the cartridge 10 upwardly and provide a compressive force between the fixed plate 18 and the movable plate 19. This force is proportional to the water pressure and it increases the adhesion between the plates 18 and 19 and between them and the respective packings. The active surface of piston 50 is suitably chosen in order that the force thus applied to the valve plates and their packings be in any event adequate for a correct operation at the actual operation pressure, anyhow this latter may vary. The adhesion is immediately increased as well in case of accidental overpressures, due for example to water hammers in the supply pipings. The removal of the plates from their contact and the displacement of the packings is thus systematically avoided.

A gap 0 provided between the cap 5 and the cartridge envelope 10 allows for upward movement to a limited degree of the cartridge envelope, connected with the above operation. Gap 0 is so chosen that, by increasing water pressure, at a certain time the envelope 10 rests against cap 5, thus avoiding further increase of the pressure applied to the inner cartridge parts. A similar gap 0A provided between the piston 50 and the cartridge bottom also allows relative limited movement therebetween, to define the compression received by the interposed packing.

As shown in Figure 5, the passages 51 and 52 of piston 50 can be angled a desired amount and positioned to accommodate different locations of inlets 7A and 8A and different locations of the water entrances of the cartridge. Therefore, with the proper construction of piston 50, matching of different valve bodies to different standard cartridges is possible.

With reference to Figure 2, in the second embodiment piston 50 is formed by an upper part 50A and a lower part 50B. The upper part 50A is provided with the passages 51, 52 and carries the packings 53, 54, and the lower part 50B has the packing 55, the passage 56 and further packings for sealing with the upper part 50A. A spring 30A, formed in this case by an elastomeric body, is mounted within the chamber 57 to assist in the upward bias of the piston 50. In this case, the lower part 50B has a diameter less than the upper part 50A, thus forming a stepped piston, and the bore in body 1 has correspondingly two different diameters. A stepped piston allows for hydraulic pressure acting on a predetermined area which is independent of the outer diameter of the piston which can be variable to accommodate differently sized cartridges 10, thus allowing optimize the valve design. Furthermore, forming the piston 50 with two separate parts 50A and 50B ensures easier manufacture and allows standardization of parts among devices with different arrangements. However, when such advantages are not of interest, the piston parts 50A and 50B can be made integral therewith to form an integral stepped piston which still maintains the predetermined hydraulic responsive area of the piston.

Figure 3 shows another modification to the embodiments of Figures 1 and 2, wherein the bottom portion 50B of piston 50 is fully made from elastomeric material which provides both for an integral spring means and for sealing the chamber 57. Again, there is a passage 56 that communicates chamber 57 with inlet 8A. The bottom portion 50B could even have a diameter different from that of upper part 50A, as in the case of Figure 2.

Figure 4 shows an embodiment where the piston 50C is stepped at two different diameters, and of course the corresponding bore in body 1 is also complementarily stepped. Seals 60, 61 and 62 of piston 50C are coaxially mounted about the piston and the passages 51 and 52 have their inlet ends at different heights and are mutually separated by seal 61. An annular chamber 57A is formed between piston 50C and the bore in body 1C, where these components are stepped, and it is in fluid communication with inlet 8A. Therefore the hydraulic pressure acts on piston 50C on its annular surface provided at the stepping thereof. Furthermore, a closed chamber 59 is formed between piston 50C and bottom 1A of valve body 1B, and it contains some air which is entrapped at the time of installation and is then compressed by piston 50C. This compressed air acts as an air spring to give an upward bias onto piston 50C, replacing the spring means 30 or 30A.

Alternatively, the chamber adjacent the body bottom 1A can retain its operation as water pressure chamber according to Figures 1 to 3, and an air pressure chamber can be provided when the piston and its bore are stepped.

The pistons, in all embodiments, can be prevented from rotating in the body 1, if this is deemed suitable, by the introduction of a dowel or other well known engineering technique, substantially in the same way in which the cartridge is usually prevented from rotating.

In the examples shown a pre-loading spring means is provided in one or another form. However such spring means can be avoided if the pressure responsive area of the piston is adequately larger than the area on which the hydraulic pressure acts aiming to separate the plates and their packings. In effect, a leakage can in this case take place at the time of installation, but in the above conditions the piston will at a later time be pushed up to contact with the cartridge and provides then for a seal, which is successively maintained by the hydraulic pressure.

**Claims**

1. A mixing valve comprising a valve body (1) with inlets (7A, 8A) for hot and cold water, at least one outlet (40B) for mixed water and an inner chamber for housing a cartridge (10), a control means (25—27), a replacement cartridge (10) inserted in said chamber of the valve body (1), a fixed plate (18) of hard material having water passages mounted in said cartridge (10) and a movable plate (19) housed in said cartridge (10), connected to said control means (25—27) and intended to cooperate with said fixed plate (18) in order to regulate the water flow delivered to the outlet and the mixing ratio between hot and cold water, characterized in that it further comprises a hydraulic responsive member (50), acting as a piston onto the cartridge, sealingly inserted with axial mobility in at least a corresponding bore of the valve body (1) between the body bottom (1A) and said chamber intended to house the cartridge (10), said hydraulic responsive member (50) having fluid passages (51, 52) which are sealingly connected with both inlets (7A, 8A) of said body and open on the face of the hydraulic responsive member (50) facing the chamber for the cartridge (10) in order to supply hot and cold water to the water passages of said fixed plate (18), said hydraulic responsive member (50) having a surface exposed to the water pressure of at least one of said body inlets, thereby providing a compressive force between the fixed plate (18) and the movable plate (19).

2. A mixing valve according to claim 1, characterized in that a spring means (30, 30A, 50B) is interposed between the valve body bottom (1A) and said hydraulic responsive member (50) for pushing the hydraulic responsive member toward the chamber that contains the cartridge (10).

3. A mixing valve according to claim 1, characterized in that said hydraulic responsive member (50) and the corresponding bore in the valve body (1) have a constant diameter on their whole length.

4. A mixing valve according to claim 1, characterized in that said hydraulic responsive member (50) and the corresponding bore in the valve body (1) are stepped, each having two portions with differing diameters.

5. A mixing valve according to claim 1, characterized in that a pressure chamber (57) is formed between the valve body bottom (1A) and the hydraulic responsive member (50), this chamber (57) communicating with one of the passages of the hydraulic responsive member (50) through an opening (56) passing through said hydraulic responsive member.

6. A mixing valve according to claim 4, characterized in that a pressure chamber (57A) is formed between said hydraulic responsive member (50) and the corresponding bore, in that region in which said components are stepped, this chamber (57A) communicating with one of the body inlets (7A, 8A).

7. A mixing valve according to claim 2, characterized in that said spring means is formed by a spring (30).

8. A mixing valve according to claim 2, characterized in that said spring means includes a resilient elastomeric material (30A, 50B).

9. A mixing valve according to claim 2, characterized in that an air pressure inner chamber (59) is formed between the valve body bottom (1A) and the hydraulic responsive member (50), and said spring means is formed by the air contained in said chamber (59), compressed by the hydraulic responsive means (50).

10. A mixing valve according to claim 2, characterized in that said hydraulic responsive member (50) and the corresponding bore are stepped, each having two portions of differing diameters, and that an air pressure inner chamber is formed between the hydraulic responsive member (50) and the corresponding bore in that region in which said components are stepped, and said spring means is formed by the air contained in said chamber, compressed by an annular portion of the hydraulic responsive member (50) defined by the stepping thereof.

11. A mixing valve according to claim 1, characterized in that said passages (51, 52) of the hydraulic responsive member (50) are so shaped as to make the positions of the inlets (7A, 8A) in the valve body (1) independent from the positions of the entrances of cartridge (10).

12. A mixing valve according to claim 1, characterized in that said hydraulic responsive member (50) includes two parts (50A, 50B), the first part (50A) having the passages (51, 52) and housing packings which seal with the inlets of the body, and the second part (50B) being mounted with seals acting towards the bore of body (1) and the first part (50A) and having a passage (56) therethrough.

13. A mixing valve according to claim 12, characterized in that said second part (50B) of the hydraulic responsive member (50) is formed by a body of elastomeric material also forming the seals (Figure 3).

14. A mixing valve according to claim 1, characterized in that the passages (51, 52) of said hydraulic responsive member (50) open on its skirt surface at different axial levels and are fluidly separated by a seal (61) extending about the perimeter of said hydraulic responsive member (Figure 4).

**Patentansprüche**

1. Mischarmatur mit einem Hahnkörper (1) mit Einlaufanschlüssen (7A, 8A) für Kalt- und Warmwasser, wenigtens einem Auslaufanschluss (40B) für das gemischte Wasser und einer Innenkammer zur Aufnahme eines Einsatzes (10), Betätigungsmitteln (25—27), einem in der Kammer des Hahnkörpers (1) eingesetzten, austauschbaren Einsatz (10), einer festen Platte (18) aus hartem Material, die Wasserdurchströmungsstellen aufweist und im Einsatz (10) eingebaut ist, und einer ebenfalls im Einsatz (10) angeordneten beweglichen Platte (19), die mit den Betätigungsmitteln (25—27) in Verbindung steht und dazu bestimmt ist, mit der festen Platte (18) zusammenzuwirken, um die am Auslaufanschluss auslaufende Wassermenge sowie die Kalt- und Warmwasser-Mischverhältnisse zu regeln, dadurch gekennzeichnet, dass die Mischarmatur ausserdem ein druckbetätigtes Element (50) umfasst, das wie ein Kolben auf den Einsatz wirkt und in wenigstens einer entsprechenden Ausbohrung im Hahnkörper (1) zwischen dem Boden (1A) des Körpers und der zur Aufnahme des Einsatzes (10) bestimmten Kammer dicht und axial verschiebbar angeordnet ist, dass das druckbetätigte Element (50) Flüssigkeitsleitungen (51, 52) aufweist, die mit den beiden Einlaufanschlüssen (7A, 8A) des Hahnkörpers dicht verbunden sind und an der der Kammer für den Einsatz (10) zugewandten Fläche des druckbetätigten Elements (50) münden, um das kalte und das warme Wasser den Wasserdurchströmungsstellen der festen Platte (18) zuzuführen, und dass das druckbetätigte Element (50) eine durch den Druck von wenigstens einem der Zufuhranschlüsse beaufschlagte Fläche hat, um zwischen der festen Platte (18) und der beweglichen Platte (19) eine Druckkraft zu erzeugen.

2. Mischarmatur nach Anspruch 1, dadurch gekennzeichnet, dass zwischen dem Boden (1A) des Hahnkörpers und dem druckbetätigten Element (50) ein elastisches Element (30, 30A, 50B) angeordnet ist, um das druckbetätigte Element zu der den Einsatz (10) enthaltenden Kammer hin zu schieben.

3. Mischarmatur nach Anspruch 1, dadurch gekennzeichnet, dass das druckbetätigte Element (50) und die entsprechende Ausborhung im Hahnkörper (1) an ihrer ganzen Erstreckung einen gleichbleibenden Durchmesser aufweisen.

4. Mischarmatur nach Anspruch 1, dadurch gekennzeichnet, dass das druckbetätigte Element (50) und die entsprechende Ausbohrung im Hahnkörper (1) stufenförmig sind und je zwei Abschnitte mit unterschiedlichen Durchmessern aufweisen.

5. Mischarmatur nach Anspruch 1, dadurch gekennzeichnet, dass zwischen dem Boden (1A) des Hahnkörpers und dem druckbetätigten Element (50) eine Druckkammer (57) gebildet ist und dass diese Druckkammer (57) über eine das druckbetätigte Element (50) durchsetzende Offnung (56) mit einer der Durchströmungsstellen des druckbetätigten Elements (50) in Verbindung steht.

6. Mischarmatur nach Anspruch 4, dadurch gekennzeichnet, dass zwischen dem druckbetätigten Element (50) und der entsprechenden Ausbohrung, im stufenförmigen Bereich dieser Teile, eine Druckkammer (57A) gebildet ist und dass diese Druckkammer (57A) mit einem der Einlaufanschlüsse (7A, 8A) des Körpers in Verbindung steht.

7. Mischarmatur nach Anspruch 2, dadurch gekennzeichnet, dass das elastische Element eine Feder (30) ist.

8. Mischarmatur nach Anspruch 2, dadurch gekennzeichnet, dass das elastische Element aus einem nachgiebigen Elastomer (30A, 50B) besteht.

9. Mischarmatur nach Anspruch 2, dadurch gekennzeichnet, dass zwischen dem Boden (1A) des Hahnkörpers und dem druckbetätigten Element (50) eine innere Luftdruckkammer (59) gebildet ist und dass das elastische Element aus der in dieser Kammer (59) enthaltenen, durch das druckbetätigte Element (50) verdichteten Luft besteht.

10. Mischarmatur nach Anspruch 2, dadurch gekennzeichnet, dass das druckbetätigte Element (50) und die entsprechende Ausbohrung Stufen bilden, da sie je zwei Abschnitte mit unterschiedlichen Durchmessern aufweisen, dass zwischen dem druckbetätigten Element (50) und der entsprechenden Ausbohrung, im stufenförmigen Bereich dieser Teile, eine innere Luftdruckkammer gebildet ist und dass das elastische Element aus der in der Kammer enthaltenen und durch den wegen der Stufenform entstehenden Ringbereich des druckbetätigten Elements (50) verdichteten Luft besteht.

11. Mischarmatur nach Anspruch 1, dadurch gekennzeichnet, dass die Durchströmungsstellen (51, 52) des druckbetätigten Elements so ausgebildet sind, dass die Lagen der Einlaufanschlüsse (7A, 8A) im Hahnkörper (1) unabhängig von den Lagen der Einläufe des Einsatzes (10) sind.

12. Mischarmatur nach Anspruch 1, dadurch gekennzeichnet, dass das druckbetätigte Element (50) aus zwei Teilen (50A, 50B) besteht, wovon der erste Teil (50A) die Durchströmungsstellen (51, 52) aufweist und Dichtungen für die Einlaufanschlüsse des Körpers aufnimmt und der zweite Teil (50B) Dichtungen für die Ausbohrung des Körpers (1) und für den ersten Teil (50A) aufnimmt und eine ihn durchsetzende Durchströmungsstelle (56) aufweist.

13. Mischarmatur nach Anspruch 12, dadurch gekennzeichnet, dass der zweite Teil (50B) des druckbetätigten Elements (50) aus einem Elastomerkörper betseht, der auch die Dichtungen bildet (Figur 3).

14. Mischarmatur nach Anspruch 1, dadurch gekennzeichnet, dass die Durchströmungsstellen (51, 52) des druckbetätigten Elements (50) an dessen Mantelfläche auf axial unterschiedliche Höhen münden und für die Flüssigkeit durch eine Dichtung (61) getrennt sind, die sich um den Umfang des druckbetätigten Elements herum erstreckt (Figur 4).

**Revendications**

1. Robinet mélangeur comprenant un corps de robinet (1) avec des raccords d'entrée (7A, 8A) pour de l'eau chaude et froide, au moins un raccord de sortie (40B) pour l'eau mélangée et une chambre intérieure pour recevoir une cartouche (10), des moyens de maneouvre (25—27), une cartouche rechangeable (10) insérée dans la chambre du corps (1) du robinet, une plaque fixe (18) en matériau dur présentant des passages pour l'eau, montée dans ladite cartouche (10), et une plaque mobile (19) logée dans ladite cartouche (10), reliée auxdits moyens de manoeuvre (25—27) et destinée à coopérer avec ladite plaque fixe (18) pour effectuer le réglage de la quantité débitée au raccord de sortie et des proportions de mélange entre eau chaude et froide, caractérisé en ce qu'il comprend en plus un organe (50) actionné par la pression, agissant comme un piston sur la cartouche, installé de manière étanche et avec une mobilité axiale dans au moins un alésage correspondant du corps (1) du robinet, entre le fond (1A) dudit corps et ladite chambre destinée à contenir la cartouche (10), ledit organe (50) actionné par la pression présentant des conduits pour liquide (51, 52) qui sont reliés de manière étanche aux deux raccords d'arrivée (7A, 8A) du corps et qui débouchent sur la face de l'organe (50) actionné par la pression qui est tournée vers la chambre pour la cartouche (10), pour alimenter avec de l'eau chaude et froide les passages pour l'eau de ladite plaque fixe (18), ledit organe (50) actionné par la pression ayant une surface exposée à la pression d'au moins un desdits raccords d'alimentation, de sorte à engendrer une force de compression entre la plaque fixe (18) et la plaque mobile (19).

2. Robinet mélangeur selon la revendication 1, caractérisé en ce qu'un organe élastique (30, 30A, 50B) est interposé entre le fond (1A) du corps du robinet et ledit organe (50) actionné par la pression, pour pousser ledit organe actionné par la pression vers la chambre qui contient la cartouche (10).

3. Robinet mélangeur selon la revendication 1, caractérisé en ce que ledit organe (50) actionné par la pression et l'alésage correspondant du corps (1) du robinet présentent un diamètre constant sur toute leur extension.

4. Robinet mélangeur selon la revendication 1, caractérisé en ce que ledit organe (50) actionné par la pression et l'alésage correspondant du corps (1) du robinet sont à gradins, et chacun d'entr'eux présente deux portions du diamètres différents.

5. Robinet mélangeur selon la revendication 1, caractérisé en ce qu'une chambre de pression (57) est formée entre le fond (1A) du corps du robinet et l'organe (50) actionné par la pression, et cette chambre (57) communique avec l'un des passages de l'organe (50) actionné par la pression à travers une ouverture (56) qui traverse ledit organe actionné par la pression.

6. Robinet mélangeur selon la revendication 4, caractérisé en ce qu'une chambre de pression (57A) est formée entre ledit organe (50) actionné par la pression et l'alésage respectif, dans la zone où lesdites parties forment un gradin, et cette chambre (57A) communique avec l'un des raccords d'entrée (7A, 8A) du corps.

7. Robinet mélangeur selon la revendication 2, caractérisé en ce que ledit organe élastique est constitué par un ressort (30).

8. Robinet mélangeur selon la revendication 2, caractérisé en ce que ledit organe élastique comprend un matériau souple élastomérique (30A, 50B).

9. Robinet mélangeur selon la revendication 2, caractérisé en ce qu'une chambre intérieure de pression d'air (59) est formée entre le fond (1A) du corps du robinet et l'organe (50) actionné par la pression, et ledit organe élastique est constitué par l'air contenu dans ladite chambre (59) comprimé par l'organe (50) actionné par la pression.

10. Robinet mélangeur selon la revendication 2, caractérisé en ce que ledit organe (50) actionné par la pression et l'alésage correspondant forment des gradins, en présentant chacun deux portions de diamètres différents, et qu'une chambre intérieure de pression d'air est formée entre l'organe (50) actionné par la pression et l'alésage respectif, dans la zone où lesdites parties forment un gradin, et ledit organe élastique est constitué par l'air contenu dans ladite chambre, comprimé par une zone annulaire, déterminée par la forme à gradins, de l'organe (50) actionné par la pression.

11. Robinet mélangeur selon la revendication 1, caractérisé en ce que les passages (51, 52) de l'organe (50) actionné par la pression sont conformés de façon à rendre les positions des raccords d'entrée (7A, 8A) dans le corps (1) du robinet indépendantes des positions des entrées de la cartouche (10).

12. Robinet mélangeur selon la revendication 1, caractérisé en ce que ledit organe (50) actionné par la pression comprend deux parties (50A, 50B), dont la première partie (50A) présente les passages (51, 52) et loge des garnitures qui déterminent l'étanchéité vers les raccords d'entrée du corps, et la seconde partie (50B) est pourvue de garnitures qui déterminent l'étanchéité vers l'alésage du corps (1) et vers la première partie (50A), et présente un passage (56) qui la traverse.

13. Robinet mélangeur selon la revendication 12, caractérisé en ce que ladite seconde partie (50B) de l'organe (50) actionné par la pression est constituée par un corps en matériau élastomérique qui constitue aussi les garnitures d'étanchéité (figure 3).

14. Robinet mélangeur selon la revendication 1, caractérisé en ce que les passages (51, 52) dudit organe (50) actionné par la pression débouchent sur sa surface de jupe à des niveaux axialement différents, et ils sont séparés pour le liquide par une garniture (61) qui s'étend autour de la périphérie dudit organe actionné par la pression (figure 4).

FIG. 1

FIG. 2

EP 0 205 486 B1

FIG. 3

FIG.5

FIG.4